# EUROPEAN PATENT SPECIFICATION

(11) **EP 3 143 273 B1**
(45) Date of publication and mention of the grant of the patent: **21.03.2018**
(21) Application number: 15724096.1
(22) Date of filing: 05.05.2015
(51) Int. Cl.: F02M 37/00, F02M 37/08, F02M 37/18, F02D 41/30, B60K 15/03

(54) **FUEL SYSTEM FOR AN INTERNAL COMBUSTION ENGINE AND A METHOD FOR CONTROLLING A FUEL SYSTEM**
BRENNSTOFFSYSTEM FÜR BRENNKRAFTMASCHINE UND VERFAHREN ZUR STEUERUNG EINES BRENNSTOFFSYSTEMS
SYSTÈME DE CARBURANT POUR MOTEUR À COMBUSTION INTERNE ET PROCÉDÉ POUR COMMANDER UN SYSTÈME DE CARBURANT

(30) Priority: 14.05.2014 SE 1450565
(43) Date of publication of application: 22.03.2017
(73) Proprietor: Scania CV AB, 151 87 Södertälje (SE)
(72) Inventor: KYLBERG, Emil, S-168 55 Bromma (SE)
(74) Representative: Scania CV AB
(86) International application number: PCT/SE2015/050493
(87) International publication number: WO 2015/174908

(56) References cited:
- WO-A1-03/023218
- WO-A1-2004/037595
- DE-A1-102011 079 673
- US-A1- 2003 183 205
- US-A1- 2010 024 771

## Description

### TECHNICAL FIELD

The present invention relates to a fuel system for an internal combustion engine and a method to control a fuel system. The invention also relates to an internal combustion engine and a vehicle according to the enclosed claims.

### BACKGROUND AND PRIOR ART

A internal combustion engine, such as a diesel engine or an Otto engine, is equipped with a fuel system to transport fuel from one or several fuel tanks to the internal combustion engine's injection system. The fuel system comprises one or several fuel pumps, which may be driven mechanically by the internal combustion engine, or be driven by an electric engine. The fuel pumps create a fuel flow and pressure to transport the fuel to the internal combustion engine's injection system, which supplies the fuel to the internal combustion engine's combustion chamber.

The fuel system often comprises only a mechanical fuel pump, which is driven and controlled by the internal combustion engine. If this fuel pump fails or provides too low a fuel flow, the fuel supply to the internal combustion engine ceases and the internal combustion engine stops. If the fuel system comprises only an electrically driven fuel pump, the same operational disruptions may arise, in which case the internal combustion engine stops. There is a risk that the vehicle may suddenly come to a standstill on or along a road, and therefore it is desirable that the fuel system comprises some type of redundancy, so that the vehicle may be moved with the help of the internal combustion engine. With a so-called limp home function the vehicle may in this manner be moved and transported to the nearest garage.

According to prior art, it is possible to arrange two fuel pumps driven by electric motors in a fuel system, in order to achieve redundancy if one of the fuel pumps fails or provides too low a fuel flow or pressure to the internal combustion engine.

Document US 2003/0183205 A1 shows a fuel system for an internal combustion engine, which system comprises a low pressure pump and two fuel pumps. The first fuel pump is driven by a first electric engine and the second fuel pump is driven by a second electric engine. During normal operation, only the first electric engine and the first fuel pump are active, while the second electric engine is shut off and the second fuel pump is bypassed. Should the first electric engine or the first fuel pump fail, the second electric engine is activated to drive the second fuel pump. The first fuel pump is bypassed, while fuel may still be supplied to the internal combustion engine. Document US 2003/0183205 A1 does not, however, show how fuel may be supplied to the internal combustion engine in the event the low pressure pump fails.

According to prior art, it is also possible to arrange a fuel pump driven by an electric engine in a fuel system, which comprises a fuel pump driven mechanically by an internal combustion engine.

Document WO 2004/037595 A1 shows a fuel system for an internal combustion engine, comprising two fuel pumps. One of the pumps is a fuel pump driven by an internal combustion engine and the other pump is a transfer pump, which transfers fuel from a first to a second fuel tank. According to one embodiment, the transfer pump may, via a three-way valve, lead fuel in series with the fuel pump operated by the internal combustion engine, with the objective of increasing the fuel flow during idling of the internal combustion engine. The fuel pump operated by the internal combustion engine is not able to generate a sufficient fuel flow during idling of the internal combustion engine. Document WO 2004/037595 A1 does not, however, mention how the fuel system functions in the event the fuel pump driven by the internal combustion engine fails.

Despite prior art solutions in this area, there is a need to develop a fuel system which reduces the risk of insufficient or non-existing fuel supply to the internal combustion engine in the event of an operational disruption.

### SUMMARY OF THE INVENTION

The objective of the present invention is to achieve a fuel system for a internal combustion engine, which system reduces the risk of insufficient or non-existing fuel supply to the internal combustion engine in the event of an operational disruption.

Another objective of the invention is to achieve a fuel system for an internal combustion engine, allowing for simple management of operational disruptions and enabling the driver of a vehicle to move the vehicle and drive it to a garage in the event of an operational disruption.

Another objective is to achieve a fuel system that is simple and non-bulky.

These objectives are achieved with a fuel system of the type specified at the beginning, which is characterised by the features specified in claim 1. Corresponding objectives are also achieved with a method to control a fuel system according to the enclosed claims. Similar objectives are also achieved with an internal combustion engine and a vehicle with such a fuel system.

The invention thus relates to a fuel system for an internal combustion engine, comprising a first fuel tank, a second fuel tank, a main supply pump and a transfer pump. A first electric engine is arranged to operate the main supply pump and a second electric engine is arranged to operate the transfer pump. The main supply pump and the transfer pump are reversible, which means that the rotational direction of the pumps may be changed by changing the rotational direction of an electric engine connected to the fuel pump. The fuel system also comprises a first flow circuit for the fuel, in which fuel flows at normal operation of the fuel system. In the first flow circuit, the transfer pump is arranged to operate in a first direction, and to supply fuel from the second fuel tank to the first fuel tank, via a first fuel conduit, which is arranged in connection with the first fuel tank. The main supply pump is arranged to operate in a first direction, and to feed fuel from the first fuel tank, via a second fuel conduit, to the internal combustion engine. The fuel system also comprises a second flow circuit for the fuel flow, wherein the fuel flows at an operational disruption in the main supply pump. In the second flow circuit, the transfer pump is reversed and arranged to operate in a second direction and to supply fuel from the second fuel tank to the internal combustion engine via a third fuel conduit, whereat the fuel flow bypasses the main supply pump. The fuel system also comprises a third flow circuit for the fuel, wherein the fuel flows at an operational disruption in the transfer pump. In the third flow circuit, the main supply pump is reversed and arranged to operate in a second direction and to supply fuel from the second fuel tank to the internal combustion engine via a fourth fuel conduit, whereat the fuel flow bypasses the transfer pump. The second direction is opposite to the first direction. Thanks to this fuel system, the objectives above are achieved.

The invention also relates to a method to control the fuel system above and comprises the following steps:
a) identifying the main supply pump's and/or the transfer pump's functionality,
   - in the event of good functionality of the main supply pump and the transfer pump;
b) supplying fuel from the second fuel tank, via a first inlet channel, to a first fuel conduit connected with the transfer pump,
c) supplying the first fuel tank with fuel, by operating the transfer pump with the second electric engine in a first direction, whereat feed fuel is fed from the second fuel tank, via the first fuel conduit, to the first fuel tank,
d) feeding fuel from the first fuel tank through the second fuel conduit, by way of operating the main supply pump with a first electric engine in a first direction,
   - in the event of an identified operational disruption in the main supply pump;
e) optionally indicating to the driver that an operational disruption has been identified,
f) supplying fuel, via a second inlet channel, from the second fuel tank to the transfer pump, by way of operating the transfer pump with the second electric engine and,
g) redirecting the transfer pump in a second direction and supplying fuel to a third fuel conduit connected with the transfer pump, and accordingly supplying fuel from the second fuel tank to the internal combustion engine with the transfer pump, or
   - in the event of an identified operational disruption in the transfer pump;
h) optionally indicating to the driver that an operational disruption has been identified,
i) supplying fuel via a third inlet channel from the second fuel tank to the main supply pump, by way of operating the main supply pump with the first electric engine,
j) redirecting the main supply pump in a second direction, and supplying fuel to a fourth fuel conduit connected with the main supply pump, and thus supplying fuel with the main supply pump from the second fuel tank to the internal combustion engine.

Other features and advantages of the invention are set out in the detailed description below.

### BRIEF DESCRIPTION OF THE DRAWINGS

Below, the invention is described with reference to the enclosed drawings, on which:
- Fig. 1: shows a schematic side view of a vehicle, which comprises a fuel system for a internal combustion engine according to the present invention,
- Fig. 2: shows a coupling diagram for a fuel system at normal operation according to the present invention, and
- Fig. 3: shows a coupling diagram at operational disruptions in the main supply pump for a fuel system according to the present invention, and
- Fig. 4: shows an embodiment of a coupling diagram at operational disruptions in the transfer pump for a fuel system according to the present invention, and
- Fig. 5: shows a flow chart for the method according to the present invention.

### DETAILED DESCRIPTION

According to the present invention, the fuel system thus comprises three flow circuits, wherein the flow direction of the fuel may be controlled with the help of the reversible main supply pump and transfer pump, depending on if the components in the fuel system function normally, i.e. at normal operation, and/or if there is an operational disruption in one of the fuel system's main supply pump or transfer pump. In this manner, a redundancy in the fuel system is achieved.

By arranging a main feed pump operated by an electric engine and a transfer pump operated by an electric engine in a low pressure circuit in a fuel system, a redundancy is allowed in the fuel system, compared to where only one fuel pump is arranged in the fuel system. By arranging three flow circuits, so that the transfer pump may directly supply fuel from the second fuel tank to the internal combustion engine at operational disruptions in the main supply pump, and so that the main supply pump may directly supply fuel from the second fuel tank to the internal combustion engine at operational disruptions in the transfer pump, an efficient redundancy may be obtained in the fuel system. Should the main supply pump operated by an electric engine fail or provide too low a fuel flow, the transfer pump is used to transport fuel to the internal combustion engine. The main supply pump and the transfer pump suitably are low pressure pumps. The fuel flow and the pressure, which the transfer pump and/or the main supply pump is able to supply to the internal combustion engine on its own, is sufficient for the internal combustion engine to be operated with full or reduced effect with the objective of driving the vehicle to a garage for repair. Thus, a fuel system for a internal combustion engine is achieved, which reduces the risk of insufficient or non-existing fuel supply to the internal combustion engine in the event of an operational disruption. Similarly, a fuel system is achieved, which provides for a so-called limp home function, enabling the driver, despite a broken main supply pump, to drive the vehicle to the nearest garage.

The first flow circuit preferably comprises a first inlet channel connected with the second fuel tank, the second flow circuit comprises a second inlet channel connected with the second fuel tank, and the third flow circuit comprises a third inlet channel connected with the second fuel tank. In this manner, the fuel flow to the respective flow circuit may be controlled from the second fuel tank in a simple manner and without complicated valve constructions.

In order to ensure a correct flow direction for the fuel, the flow circuits are preferably arranged with one or several back valves. The back valves have a simple design and may efficiently prevent fuel flow in a non-desired direction. The back valves may be passive, i.e. not requiring power supply to function, whereby a very simple and robust design is obtained. Alternatively, the valves may be electrically controllable, whereby electric control via a control device in the vehicle may be obtained.

The main supply pump and the transfer pump are preferably reversible by changing the rotational direction of the electric engines. In this manner, the flow direction may be changed quickly and efficiently.

Suitably, the main feed pump and the transfer pump are connected to a control device via a CAN bus. Thus, a compact fuel system is achieved, which is easy to control and thus provides for a correct fuel supply to the internal combustion engine.

By arranging sensor devices in connection with the second fuel conduit, the main feed pump's functionality may be identified. The sensor device suitably is a flow level sensor or a pressure sensor, which detects the fuel flow downstream of the main supply pump and upstream of the internal combustion engine, and which is connected to the control device via the CAN bus.

Alternatively, an operational disruption in the main supply pump is identified by detecting the function of the first electric engine. In the event the first electric engine ceases to function or operates with reduced power, there is a great probability that there may be an operational disruption in the main supply pump. The sensor device may in such case consist of an element that detects the function of the electric engine operating the pump, suitably by detecting the engine's power consumption.

At an identified operational disruption in the main supply pump, the fuel flow is arranged to flow through the second flow circuit. In this manner, the fuel flow may bypass the main supply pump, and the fuel flow and pressure which the transfer pump is able to supply to the internal combustion engine on its own is sufficient for the internal combustion engine to be operated with the objective of driving the vehicle to a garage for repair.

In the same way as in connection with the main supply pump, a sensor device, identifying the transfer pump's functionality, may be arranged in the first fuel tank and be connected to the control device via the CAN bus. The sensor device preferably comprises a level sensor, which detects the fuel level in the first fuel tank. An operational disruption in the transfer pump may then be detected by way of sending signals from the level sensor to the control device, and if the fuel level does not rise in the first fuel tank despite power signals to the transfer pump, an operational disruption in the transfer pump is identified. In this manner, one may thus obtain an indication of the transfer pump's functionality in a simple way. Alternatively, the sensor device may be arranged to detect the function of the second electric engine operating the transfer pump, preferably by detecting its power consumption.

At an identified operational disruption in the transfer pump, the fuel is arranged to flow through the third flow circuit. In this manner, the fuel flow may bypass the transfer pump, and the fuel flow and pressure which the main supply pump is able to supply to the internal combustion engine on its own is sufficient for the internal combustion engine to be operated with the objective of driving the vehicle to a garage for repair.

Suitably, some form of indication to the driver is activated, when an operational disruption is identified in the main supply pump and/or the transfer pump. The driver is warned and may take measures to drive the vehicle to a garage. Thus, a fuel system is achieved, which allows for a simple management of an operational disruption.

Suitably, the first fuel tank is adapted so that it holds a smaller volume than the second fuel tank. Preferably, the first fuel tank holds 20-50 litres and the second fuel tank holds 300-1,000 litres. Thus, a non-bulky fuel system is achieved.

The main supply pump may be arranged in the first fuel tank. By arranging the main supply pump in the first fuel tank, the main supply pump is protected from the environment, and a natural cooling of the fuel in the first fuel tank is obtained. Alternatively, the transfer pump is also arranged inside the first fuel tank. With the main feed pump and the transfer pump arranged inside the first fuel tank, a non-bulky fuel system is achieved.

The invention is described further below with reference to the enclosed drawings.

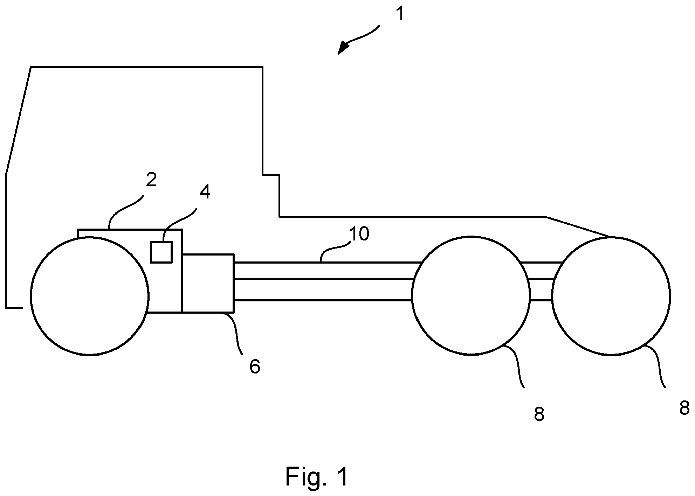

Fig. 1 shows a schematic side view of a vehicle 1, which vehicle comprises a fuel system 4 for an internal combustion engine 2. The internal combustion engine 2 is connected to a gearbox 6, which is further connected to the driving wheels 8 of the vehicle 1 via a transmission. The vehicle also comprises a chassis 10.

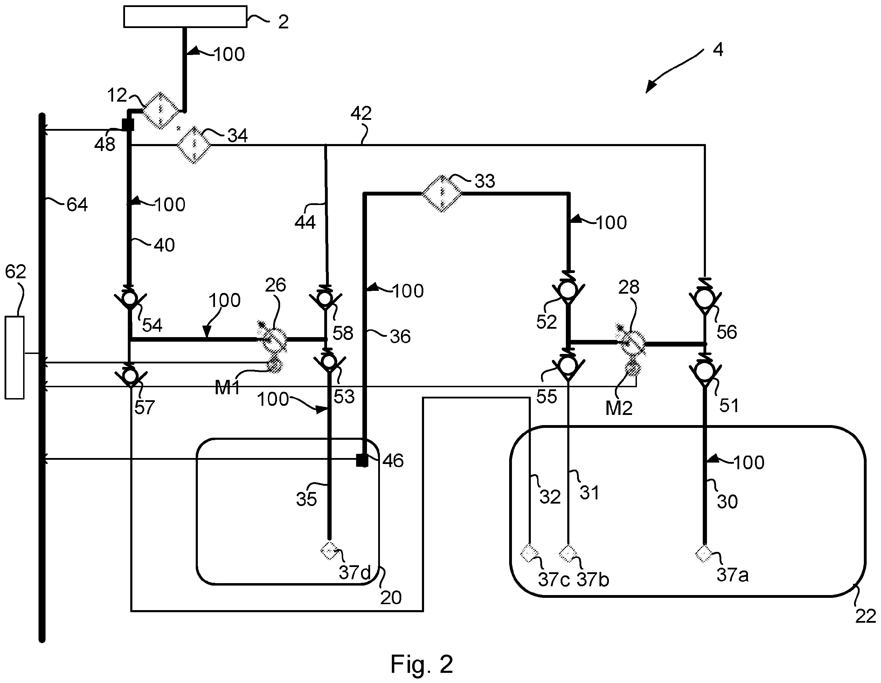

Fig. 2, Fig. 3 and Fig. 4 show a coupling diagram for the fuel system 4. The fuel system 4 is of a type usually referred to as common rail and comprises several components. A main fuel filter 12 is arranged downstream of the internal combustion engine 2 or at a internal combustion engine 2, at which the fuel system's high pressure circuit (not displayed) is preferably arranged. The high pressure circuit usually comprises several components, which are not displayed in detail, such as a high pressure pump, an accumulator in the form of a so-called common rail and an injection system. Alternatively, the fuel system may be replaced by another form of injection system, e.g. a piezo or a unit injection system.

The fuel system 4 also comprises, in its low pressure circuit, a first fuel tank 20 and a second fuel tank 22, a main supply pump 26, a transfer pump 28, and a pre-filter 33 and 34. These components may be arranged on the vehicle's chassis 10. The main fuel filter 12 is arranged downstream of the main supply pump 26 and upstream of the internal combustion engine in the fuel system 4. The main supply pump 26 is a low pressure pump, supplying the high pressure pump in the high pressure circuit with fuel.

The first fuel tank 20 is adapted to hold a smaller volume than the second fuel tank 22. The transfer pump 28 is, according to Fig. 2, arranged between the first fuel tank 20 and the second fuel tank 22. The transfer pump 28 is operated by a second electrical engine M2, and its main task is to supply fuel from the second fuel tank 22 to the first fuel tank 20, via a first fuel conduit 36. The main supply pump 26 in Figs. 2, 3 and 4 is arranged downstream of a back valve 53, but the main supply pump 26 may also be arranged inside the first fuel tank 20, and is accordingly protected from the environment and cooled by the fuel. The main supply pump 26 is operated by a first electric engine M1, and supplies the fuel from the first fuel tank 20, via a second fuel conduit 40, through the main fuel filter 12 and further to the internal combustion engine 2. The fuel is then fed, at a high pressure, to the common rail and further along to the injection system. The main supply pump 26 and the transfer pump 28 are controlled by a control device 62, via a CAN bus 64, which are displayed only in Fig. 2 for purposes of clarity. Signals are sent from a level sensor 46 to indicate the transfer pump's functionality and from a pressure sensor 48 to indicate the main supply pump's functionality, to the control device 62 via the CAN bus 64.

The pre-filter 33 is arranged downstream of the transfer pump 28 and in connection with the first fuel conduit 36, pre-filtering fuel supplied from the second fuel tank 22. The pre-filter 34 is arranged downstream of the transfer pump 28 and in connection with a third fuel conduit 42, pre-filtering fuel supplied from the second fuel tank 22. In the second fuel tank, three inlet channels 30, 31 and 32 are arranged, which are comprised in a respective first, second and third flow circuit 100, 200, and 300.

Fig. 2 shows the fuel system's 4 function at normal operation, and the flow circuit 100 is marked with a thick line. The second fuel tank 22 comprises the first inlet channel 30, which is arranged upstream of a back valve 51, and the transfer pump 28. The transfer pump 28 is connected with the first fuel conduit 36 via a back valve 52 and the pre-filter 33. The inlet channel 30 is equipped with a filter 37a that filters the fuel before it is led into the fuel system 4. At normal operation, as displayed in Fig. 2, fuel is supplied from the second fuel tank 22 to the first fuel tank 20 by operating the transfer pump 28 with the second electric engine M2. The fuel is further fed from the first fuel tank 20 by operating the main supply pump 26 with the first electric engine M1, and the fuel is fed from the first fuel tank 20 via a filter 37d and a fourth inlet channel 35, equipped with a back valve 53, to the second fuel conduit 40, which is equipped with a back valve 54 in order to further secure the flow direction. The fuel is then led further to the internal combustion engine 2 through a main fuel filter 12. A pressure sensor 48 is arranged in connection with the second fuel conduit 40. The pressure sensor 48 identifies the fuel flow in the second fuel conduit 40, and may thus determine whether there is an operational disruption in the main supply pump 26. It is also possible to identify an operational disruption in the main supply pump 26 with a sensor device that detects the function of the first electric engine M1, for example by detecting the engine's power consumption. In the event the first electric engine M1 ceases to function or operates with reduced power, there is a great probability that there may be an operational disruption in the main supply pump 26. At an operational disruption or outage of the main supply pump 26, the fuel flow is led to the second flow circuit 200. In the first fuel tank 20, a level sensor 46 is arranged to identify the fuel level in the first fuel tank 20. The level sensor 46 is connected to the CAN bus 64 and the control device 62, which controls the transfer pump 28 and the main supply pump 26. The level sensor 46 identifies the fuel level in the first fuel tank 20, and may thus determine whether there is an operational disruption in the transfer pump. For example, in a situation where power is supplied to the transfer pump 28 but the fuel level drops in the first fuel tank 20, there very probably is an operational disruption in the transfer pump 28. At an operational disruption or outage of the transfer pump 28, the fuel flow is led to the third flow circuit 300.

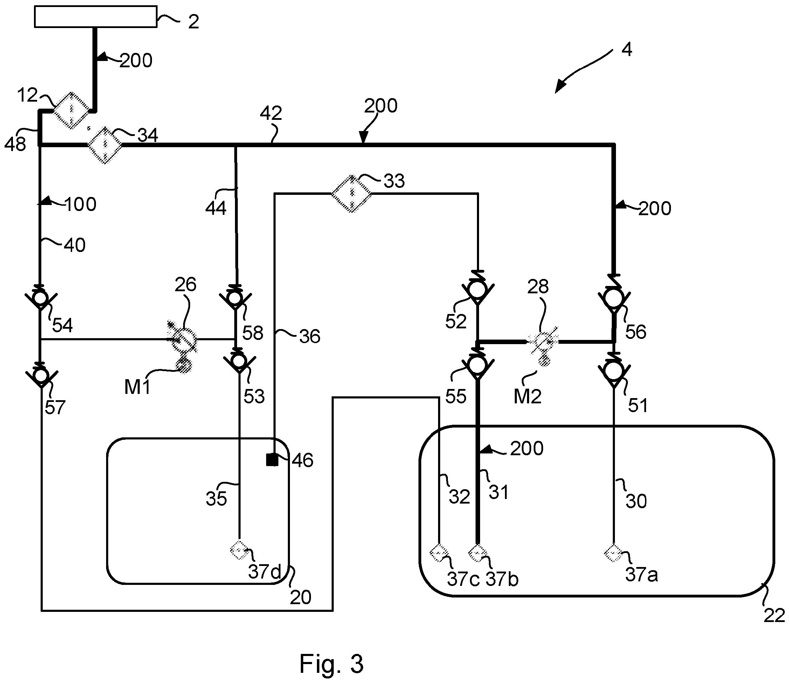

The fuel system's 4 function at an operational disruption in the main supply pump 26 and when the fuel flow is led to the second flow circuit 200 is displayed in Fig. 3. The second flow circuit 200 is marked with a thick line in Fig. 3. The second fuel tank 22 comprises the second inlet channel 31, which is arranged upstream of a back valve 55, and the transfer pump 28. The transfer pump 28 is redirected in a second direction, i.e. in an opposite direction to the first direction and compared to the direction in the flow circuit 100, in order for the fuel flow to bypass the main supply pump 26 via a third fuel conduit 42. A back valve 56 is arranged downstream of the transfer pump 28, in order to additionally secure the fuel's flow direction, and via the third fuel conduit 42 the fuel is fed through the pre-filter 34, further along to the main fuel filter 12, and to the internal combustion engine 2. The second inlet channel 31 is equipped with a filter 37b that filters the fuel before it is led into the fuel system 4. At an operational disruption in the main supply pump, fuel is supplied from the second fuel tank 22 to the internal combustion engine 2, by operating the transfer pump 28 with the second electric engine M2. The fuel flow and the pressure that the transfer pump 28 is able to supply to the internal combustion engine 2 is sufficient for the internal combustion engine 2 to be driven with full or reduced effect, with the objective of driving the vehicle to a garage for repair. In one embodiment, the control device 62 may, with knowledge about the engine's average fuel consumption and the engine's fuel requirement, calculate a distance, which the vehicle may drive in limp home function and present this available distance to the driver. In order to extend this distance, the control device may be adapted to initiate a shut-off of some of the engine's attachments, such as air conditioning units and similar, in order to reduce the engine's fuel consumption.

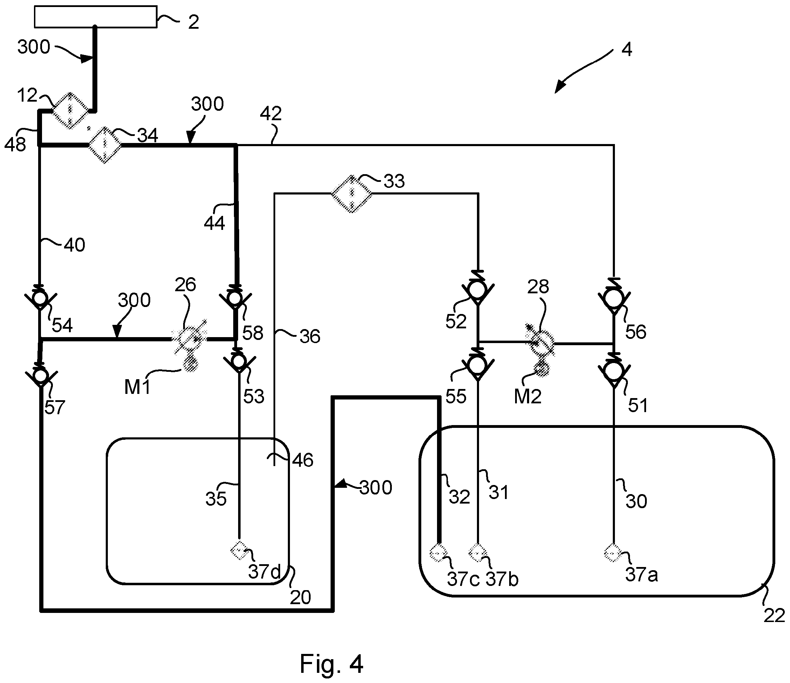

The fuel system's 4 function at an operational disruption in the transfer pump 28, and when the fuel flow is led to the second flow circuit 300, is displayed in Fig. 4. The third circuit 300 is marked with a thick line in Fig. 4. The second fuel tank 22 comprises the third inlet channel 31, which is arranged upstream of a back valve 57, and the main supply pump 26. The main supply pump 26 is redirected in a second direction, i.e. in an opposite direction to the first direction and compared to the direction in the flow circuit 100, in order for the fuel flow to bypass the transfer pump 28 via a fourth fuel conduit 44. A back valve 58 is arranged downstream of the main supply pump 26, in order to additionally secure the fuel's flow direction, and the fuel is supplied via the fourth fuel conduit 44, through the pre-filter 34, further along to the main fuel filter 12, and to the internal combustion engine 2. The third inlet channel 32 is equipped with a filter 37c that filters the fuel before it is led into the fuel system 4. At an operational disruption in the transfer pump 28, fuel is supplied from the second fuel tank 22 to the internal combustion engine 2, by operating the main supply pump 26 with the first electric engine M1. The fuel flow and the pressure that the main supply pump 26 is able to supply to the internal combustion engine 2 is sufficient for the internal combustion engine 2 to be operated with full or reduced effect, with the objective of driving the vehicle to a garage for repair. It is also possible for the control device 62, with knowledge about the engine's average fuel consumption and the engine's fuel requirement, to calculate a distance, which the vehicle may drive in limp home function and present this available distance to the driver. In order to extend this distance, the control device may be adapted to initiate a shut-off of some of the engine's attachments, such as air conditioning units and similar, in order to reduce the engine's fuel consumption.

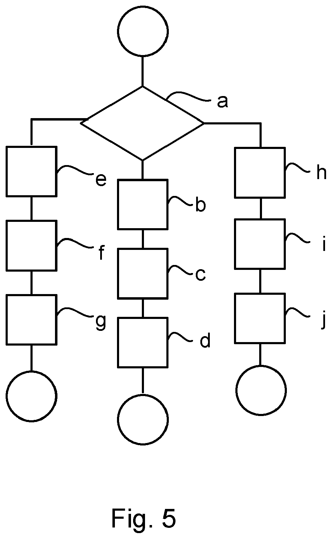

Fig. 5 shows a flow chart of a method to control the fuel system 4. The method comprises the steps of
a) identifying the main supply pump's 26 and the transfer pump's 28 functionality,
   - in the event of good functionality of the main supply pump 26 and the transfer pump 28;
b) supplying fuel from the second fuel tank 22, via a first inlet channel 30, to a first fuel conduit 36 connected with the transfer pump 28,
c) supplying the first fuel tank 20 with fuel, by operating the transfer pump 28 with a second electric engineM2 in a first direction, whereat fuel is fed from the second fuel tank 22, via the first fuel conduit 36, to the first fuel tank 20,
d) feeding fuel from the first fuel tank 20 through the second fuel conduit 40, by operating the main supply pump 26 with a first electric engine M1,
   - in the event of an identified operational disruption in the main supply pump 26;
e) optionally indicating to the driver that an operational disruption has been identified,
f) supplying fuel, via a second inlet channel 31, from the second fuel tank 22 to the transfer pump 28, by way of operating the transfer pump 28 with the second electric engineM2 and,
g) redirecting the transfer pump 28 in a second direction and supplying fuel to a third fuel conduit 42 connected with the transfer pump 28, and accordingly supplying fuel from the second fuel tank 22 to the internal combustion engine 2, or
   - in the event of an identified operational disruption in the transfer pump 28;
h) optionally indicating to the driver that an operational disruption has been identified,
i) supplying fuel, via a third inlet channel 32 from the second fuel tank 22 to the main supply pump 26, by way of operating the main supply pump 26 with the first electric engine M1,
j) redirecting the main supply pump 26 in a second direction, and supplying fuel to a fourth fuel conduit 44 connected with the main supply pump 26, and thus supplying fuel from the second fuel tank 22 to the internal combustion engine 2.

Indication of an identified operational disruption may, in a further developed embodiment, comprise an indication to the driver of the available driving distance that a vehicle may be driven. In such a case, the method may comprise a step for the calculation of an available driving distance, based on the known fuel consumption. Analogously, in a internal combustion engine that is used in other applications, a remaining operating time for the internal combustion engine, when driven with an indicated operational disruption, may be presented. In such a case, the method may comprise a step for the calculation of a remaining operating time.

In a further developed embodiment, in the event of an indication of an identified operational disruption, the method may comprise a step which reduces the engine's fuel consumption by initiating a shut-off of certain attachments driven by the engine, e.g. a compressor for air conditioning.

The components and features specified above may be combined between different embodiments specified.

## Claims

1. Fuel system for an internal combustion engine (2), which fuel system (4) comprises a first fuel tank (20), a second fuel tank (22), a main supply pump (26) and a transfer pump (28), wherein a first electric engine (M1) is arranged to operate the main supply pump (26), and a second electric engine (M2) is arranged to operate the transfer pump (28), **characterised in that** the main supply pump (26) and the transfer pump (28) are reversible, and **in that** the fuel system (4) comprises:
i) a first flow circuit (100) for the fuel, in which the fuel flows at the fuel system's normal operation, and in which the transfer pump (28) is arranged to operate in a first direction and to supply fuel from the second fuel tank (22) to the first fuel tank (20) via a first fuel conduit (36), which is arranged in connection with the first fuel tank (20), and wherein the main supply pump (26) is arranged to operate in a first direction and to supply fuel from the first fuel tank (20), through a second fuel conduit (40), to the internal combustion engine (2),
ii) a second flow circuit (200) for the fuel, in which the fuel flows at an operational disruption in the main supply pump (26), and in which the transfer pump (28) is redirected and arranged to operate in a second direction and to supply fuel from the second fuel tank (22) to the internal combustion engine (2), via a third fuel conduit (42), wherein the fuel flow bypasses the main supply pump (26), and
iii) a third flow circuit (300) for the fuel, in which the fuel flows at an operational disruption in the transfer pump (28), and in which the main supply pump (26) is redirected and arranged to operate in a second direction and to supply fuel from the second fuel tank (22), via a fourth fuel conduit (44), to the internal combustion engine (2), wherein the fuel flow bypasses the transfer pump (26).

2. Fuel system according to claim 1, **characterised in that** the first flow circuit (100) comprises a first inlet channel (30) connected with the second fuel tank (22), the second flow circuit (200) comprises a second inlet channel (31) connected with the second fuel tank (22), and the third flow circuit (300) comprises a third inlet channel (32) connected with the second fuel tank (22).

3. Fuel system according to claim 1 or 2, **characterised in that** each of the first, second and third flow circuits (100, 200, 300) is arranged with one or several back valves (51, 52, 53, 54; 55, 56; 57, 58), in order to control the flow direction of the fuel.

4. Fuel system according to any of the previous claims, **characterised in that** the main supply pump (26) and the transfer pump (28) may be reversed by way of changing the rotational direction of the electric engines (M1, M2).

5. Fuel system according to any of the previous claims, **characterised in that** the main supply pump (26) and the transfer pump (28) are connected to a control device (62) via a CAN bus (64).

6. Fuel system according to claim 5, **characterised in that** a sensor device (48) is arranged so that it may identify the main supply pump's (26) functionality downstream of the main supply pump (26), and so that it is connected to the control device (62) via the CAN bus (64).

7. Fuel system according to claim 6, **characterised in that** the sensor device (48) comprises a pressure sensor, which is arranged downstream of the main supply pump and upstream of the internal combustion engine (2).

8. Fuel system according to claim 5, **characterised in that** the sensor device is arranged to detect the function of the first electric engine (M1) operating the main supply pump (26), preferably by detecting its power consumption.

9. Fuel system according to any of claims 6-8, **characterised in that**, at an identified operational disruption in the main supply pump (26), the fuel flow is arranged to flow through the second flow circuit (200).

10. Fuel system according to any of the previous claims, **characterised in that** a sensor device (46), which identifies the transfer pump's (28) functionality, is arranged in the first fuel tank (20) and is connected to the control device (62) via the CAN bus (64).

11. Fuel system according to claim 10, **characterised in that** the sensor device (46) comprises a level sensor, which detects the fuel level in the first fuel tank (20).

12. Fuel system according to claim 10, **characterised in that** the sensor device is arranged to detect the function of the electric engine (M2) operating the transfer pump (26), preferably by detecting its power consumption.

13. Fuel system according to any of claims 10-12, **characterised in that** at an identified operational disruption in the transfer pump (28), the fuel flow is arranged to flow through the third flow circuit (300).

14. Internal combustion engine (2), **characterised in that** it comprises a fuel system (4) according to any of the claims 1-13.

15. Vehicle (1), **characterised in that** it comprises a fuel system (4) according to any of the claims 1-13.

16. Method to control a fuel system (4) for an internal combustion engine (2) according to one of claims 1-13, **characterised by** the following steps:
a) identifying the main supply pump's (26) and the transfer pump's (28) functionality,
- in the event of good functionality of the main supply pump (26) and the transfer pump (28);
b) supplying fuel from the second fuel tank (22), via a first inlet channel (30), to a first fuel conduit (36) connected with the transfer pump (28),
c) supplying the first fuel tank (20) with fuel, by operating the transfer pump (28) with a second electric engine (M2) in a first direction, whereat fuel is fed from the second fuel tank (22), via the first fuel conduit (36), to the first fuel tank (20),
d) feeding fuel from the first fuel tank (20) through the second fuel conduit (40), by way of operating the main supply pump (26) with a first electric engine (M1) in a first direction,
- in the event of an identified operational disruption in the main feed pump (26);
e) optionally indicating to the driver that an operational disruption has been identified,
f) supplying fuel, via a second inlet channel (31), from the second fuel tank (22) to the transfer pump (28), by way of operating the transfer pump (28) with the second electric engine (M2) and,
g) redirecting the transfer pump (28) in a second direction and supplying fuel to a third fuel conduit (42) connected with the transfer pump (28), and accordingly supplying fuel from the second fuel tank (22) to the internal combustion engine (2), or
- in the event of an identified operational disruption in the transfer pump (28);
h) optionally indicating to the driver that an operational disruption has been identified,
i) supplying fuel, via a third inlet channel (32) from the second fuel tank (22) to the main supply pump (26), by way of operating the main supply pump (26) with the first electric engine (M1),
j) redirecting the main supply pump (26) in a second direction, and supplying fuel to a fourth fuel conduit (44) connected with the main supply pump (26), and thus supplying fuel from the second fuel tank (22) to the internal combustion engine (2).

## Patentansprüche

1. Kraftstoffsystem für einen Motor mit innerer Verbrennung (2), wobei das Kraftstoffsystem (4) einen ersten Kraftstofftank (20), einen zweiten Kraftstofftank (22), eine Haupt-Förderpumpe (26) und eine Neben-Förderpumpe (28) aufweist, wobei ein erster Elektromotor (M1) zur Betätigung der Haupt-Förderpumpe (26) und ein zweiter Elektromotor (M2) zur Betätigung der Neben-Förderpumpe (28) angeordnet sind, **dadurch gekennzeichnet, dass** die Haupt-Förderpumpe (26) und die Neben-Förderpumpe (28) umkehrbar sind, und dass das Kraftstoffsystem (4) aufweist:
I) einen ersten Strömungskreis (100) für den Kraftstoff, in dem der Kraftstoff bei Normalbetrieb des Kraftstoffsystems strömt, und in dem die Neben-Förderpumpe (28) in einer ersten Richtung arbeitet, so dass sie dem ersten Kraftstofftank (20) Kraftstoff aus dem zweiten Kraftstofftank (22) über eine erste Kraftstoffleitung (36), die mit dem ersten Kraftstofftank (20) verbunden ist, zuführt, und wobei die Haupt-Förderpumpe (26) in einer ersten Richtung arbeitet, so dass sie dem Motor mit innerer Verbrennung (2) Kraftstoff aus dem ersten Kraftstofftank (20) durch eine zweite Kraftstoffleitung (40) zuführt,
II) einen zweiten Strömungskreis (200) für den Kraftstoff, in dem der Kraftstoff bei einer Betriebsstörung der Haupt-Förderpumpe (26) strömt, und in dem die Neben-Förderpumpe (28) gekehrt wird und in einer zweiten Richtung arbeitet, so dass sie dem Motor mit innerer Verbrennung (2) Kraftstoff aus dem zweiten Kraftstofftank (22) über eine dritte Kraftstoffleitung (42) zuführt, wobei der Kraftstofffluss die Haupt-Förderpumpe (26) umgeht, und
III) einen dritten Strömungskreis (300) für den Kraftstoff, in dem der Kraftstoff bei einer Betriebsstörung der Neben-Förderpumpe (28) strömt, und in dem die Haupt-Förderpumpe (26) umgekehrt wird und in einer zweiten Richtung arbeitet, so dass sie dem Motor mit innerer Verbrennung (2) Kraftstoff aus dem zweiten Kraftstofftank (22) über eine vierte Kraftstoffleitung (44) zuführt, wobei der Kraftstofffluss die Neben-Förderpumpe (28) umgeht.

2. Kraftstoffsystem (4) nach Anspruch 1, **dadurch gekennzeichnet, dass** der erste Strömungskreis (100) einen ersten Einlasskanal (30) aufweist, der mit dem zweiten Kraftstofftank (22) verbunden ist, wobei der zweite Strömungskreis (200) einen zweiten Einlasskanal (31) aufweist, der mit dem zweiten Kraftstofftank (22) verbunden ist, und der dritte Strömungskreis (300) einen dritten Einlasskanal (32) aufweist, der mit dem zweiten Kraftstofftank (22) verbunden ist.

3. Kraftstoffsystem nach Anspruch 1 oder 2, **dadurch gekennzeichnet, dass** der erste, zweite und dritte Strömungskreis (100, 200, 300) jeweils mit einem oder mehreren Rückschlagventilen (51, 52, 53, 54; 55, 56, 57, 58) ausgeführt ist, um die Strömungsrichtung des Kraftstoffs zu steuern.

4. Kraftstoffsystem nach einem der vorigen Ansprüche, **dadurch gekennzeichnet, dass** die Haupt-Förderpumpe (26) und die Neben-Förderpumpe (28) durch Ändern der Rotationsrichtung der Elektromotoren (M1, M2) umgekehrt werden können.

5. Kraftstoffsystem nach einem der vorigen Ansprüche, **dadurch gekennzeichnet, dass** die Haupt-Förderpumpe (26) und die Neben-Förderpumpe (28) mit einer Steuerungseinrichtung (62) über einen CAN-Bus (64) verbunden sind.

6. Kraftstoffsystem nach Anspruch 5, **dadurch gekennzeichnet, dass** eine Sensoreinrichtung (48) so angeordnet ist, dass sie die Funktionalität der Haupt-Förderpumpe (26) stromabwärts der Haupt-Förderpumpe (26) identifizieren kann, und dass sie mit der Steuerungseinrichtung (62) über den CAN-Bus (64) verbunden ist.

7. Kraftstoffsystem nach Anspruch 6, **dadurch gekennzeichnet, dass** die Sensoreinrichtung (48) einen Drucksensor aufweist, der stromabwärts der Haupt-Förderpumpe und stromaufwärts des Motors mit innerer Verbrennung (2) angeordnet ist.

8. Kraftstoffsystem nach Anspruch 5, **dadurch gekennzeichnet, dass** die Sensoreinrichtung zur Detektion der Funktion des die Haupt-Förderpumpe (26) betreibenden ersten Elektromotors (M1) eingerichtet ist, vorzugsweise durch die Detektion von dessen Leistungsaufnahme.

9. Kraftstoffsystem nach einem der Ansprüche 6 bis 8, **dadurch gekennzeichnet, dass** bei einer identifizierten Betriebsstörung der Haupt-Förderpumpe (26) der Kraftstofffluss durch den zweiten Kraftstoffkreis (200) geleitet wird.

10. Kraftstoffsystem nach einem der vorigen Ansprüche, **dadurch gekennzeichnet, dass** die Sensoreinrichtung (46), die die Funktionalität der Neben-Förderpumpe (28) identifiziert, im ersten Kraftstofftank (20) angeordnet und mit der Steuerungseinrichtung (62) über den CAN-Bus (64) verbunden ist.

11. Kraftstoffsystem nach Anspruch 10, **dadurch gekennzeichnet, dass** die Sensoreinrichtung (46) einen Pegelsensor aufweist, der den Kraftstoffpegel im ersten Kraftstofftank (20) detektiert.

12. Kraftstoffsystem nach Anspruch 10, **dadurch gekennzeichnet, dass** die Sensoreinrichtung zum Detektieren der Funktion des die Förderpumpe (26) betätigenden Elektromotors (M2), vorzugsweise durch die Detektion von dessen Leistungsaufnahme, angeordnet ist.

13. Kraftstoffsystem nach einem der Ansprüche 10 bis 12, **dadurch gekennzeichnet, dass** bei einer identifizierten Betriebsstörung der Neben-Förderpumpe (28) der Kraftstofffluss durch den dritten Kraftstoffkreis (200) geleitet wird.

14. Motor mit innerer Verbrennung (2), **dadurch gekennzeichnet, dass** er ein Kraftstoffsystem (4) nach einem der Ansprüche 1 bis 13 aufweist.

15. Fahrzeug (1), **dadurch gekennzeichnet, dass** es ein Kraftstoffsystem (4) nach einem der Ansprüche 1 bis 13 aufweist.

16. Verfahren zum Steuern eines Kraftstoffsystems (4) für einen Motor mit innerer Verbrennung (2) nach einem der Ansprüche 1 bis 13, **gekennzeichnet durch** die folgenden Schritte:
a) Identifizieren der Funktionalität der Haupt-Förderpumpe (26) und der Neben-Förderpumpe (28),
- bei guter Funktionalität der Haupt-Förderpumpe (26) und der Neben-Förderpumpe (28)
b) Zuführen von Kraftstoff aus dem zweiten Kraftstofftank (22) über einen ersten Einlasskanal (30) zu einer ersten Kraftstoffleitung (36), die mit der Neben-Förderpumpe (28) verbunden ist,
c) Zuführen von Kraftstoff aus dem ersten Kraftstofftank (20) durch Betätigen der Neben-Förderpumpe (28) mittels eines zweiten Elektromotors (M2) in einer ersten Richtung, wodurch dem ersten Kraftstofftank (20) Kraftstoff aus dem zweiten Kraftstofftank (22) über die erste Kraftstoffleitung (36) zugeführt wird,
d) Zuführen von Kraftstoff aus dem ersten Kraftstofftank (20) durch die zweite Kraftstoffleitung (40) durch die Betätigung der Haupt-Förderpumpe (26) mittels eines ersten Elektromotors (M1) in der ersten Richtung,
- im Fall einer identifizierten Betriebsstörung der Haupt-Förderpumpe (26):
e) optionale Meldung an den Fahrer, dass eine Betriebsstörung identifiziert worden ist,
f) Zuführen von Kraftstoff über einen zweiten Einlasskanal (31) aus dem zweiten Kraftstofftank (22) zur Neben-Förderpumpe (28), indem die Neben-Förderpumpe (28) vom zweiten Elektromotor (M2) betätigt wird,
g) Umkehren der Neben-Förderpumpe (28) in eine zweite Richtung und Zuführen von Kraftstoff zu einer mit der Neben-Förderpumpe (28) verbundenen dritten Kraftstoffleitung (42) und entsprechend Zuführen von Kraftstoff aus dem zweiten Kraftstofftank (22) zum Motor mit innerer Verbrennung (2), oder
- im Fall einer identifizierten Betriebsstörung der Neben-Förderpumpe (28):
h) optionale Meldung an den Fahrer, dass eine Betriebsstörung identifiziert worden ist,
i) Zuführen von Kraftstoff über einen dritten Einlasskanal (32) aus dem zweiten Kraftstofftank (22) zur Haupt-Förderpumpe (26), indem die Haupt-Förderpumpe (26) vom ersten Elektromotor (M1) betätigt wird,
j) Umkehren der Haupt-Förderpumpe (26) in eine zweite Richtung und Zuführen von Kraftstoff zu einer mit der Neben-Förderpumpe (28) verbundenen vierten Kraftstoffleitung (44) und somit entsprechend Zuführen von Kraftstoff aus dem zweiten Kraftstofftank (22) zum Motor mit innerer Verbrennung (2).

## Revendications

1. Système pour carburant pour un moteur à combustion interne (2), lequel système pour carburant (4) comprend un premier réservoir de carburant (20), un second réservoir de carburant (22), une pompe d'alimentation principale (26) et une pompe de transfert (28), dans lequel un premier moteur électrique (M1) est agencé pour actionner la pompe d'alimentation principale (26), et un second moteur électrique (M2) est agencé pour actionner la pompe de transfert (28), **caractérisé en ce que** la pompe d'alimentation principale (26) et la pompe de transfert (28) sont réversibles, et **en ce que** le système pour carburant (4) comprend :
i) un premier circuit d'écoulement (100) pour le carburant, dans lequel le carburant s'écoule lors du fonctionnement normal du système pour carburant, et dans lequel la pompe de transfert (28) est agencée pour fonctionner dans une première direction et alimenter en carburant le premier réservoir de carburant (20), à partir du second réservoir de carburant (22), via un premier conduit de carburant (36) qui est agencé en connexion avec le premier réservoir de carburant (20), et dans lequel la pompe d'alimentation principale (26) est agencée pour fonctionner dans une première direction et alimenter en carburant le moteur à combustion interne (2), à partir du premier réservoir de carburant (20), à travers un deuxième conduit de carburant (40),
ii) un deuxième circuit d'écoulement (200) pour le carburant, dans lequel le carburant s'écoule lors d'une interruption opérationnelle de la pompe d'alimentation principale (26), et dans lequel la pompe de transfert (28) est redirigée et agencée pour fonctionner dans une seconde direction et alimenter en carburant le moteur à combustion interne (2), à partir du second réservoir de carburant (22), via un troisième conduit de carburant (42), l'écoulement de carburant contournant la pompe d'alimentation principale (26), et
iii) un troisième circuit d'écoulement (300) pour le carburant, dans lequel le carburant s'écoule lors d'une interruption opérationnelle de la pompe de transfert (28), et dans lequel la pompe d'alimentation principale (26) est redirigée et agencée pour fonctionner dans une seconde direction et alimenter en carburant le moteur à combustion interne (2), à partir du second réservoir de carburant (22), via un quatrième conduit de carburant (44).

2. Système pour carburant selon la revendication 1, **caractérisé en ce que** le premier circuit d'écoulement (100) comprend un premier canal d'entrée (30) relié au second réservoir de carburant (22), le deuxième circuit d'écoulement (200) comprend un deuxième canal d'entrée (31) relié au second réservoir de carburant (22), et le troisième circuit d'écoulement (300) comprend un troisième canal d'entrée (32) relié au second réservoir de carburant (22).

3. Système pour carburant selon la revendication 1 ou 2, **caractérisé en ce que** chacun des premier, deuxième et troisième circuits d'écoulement (100, 200, 300) est muni d'une ou plusieurs vannes de retour (51, 52, 53, 54 ; 55, 56 ; 57, 58), afin de commander la direction d'écoulement du carburant.

4. Système pour carburant selon l'une quelconque des revendications précédentes, **caractérisé en ce que** la pompe d'alimentation principale (26) et la pompe de transfert (28) peuvent être inversées en changeant la direction de rotation des moteurs électriques (M1, M2).

5. Système pour carburant selon l'une quelconque des revendications précédentes, **caractérisé en ce que** la pompe d'alimentation principale (26) et la pompe de transfert (28) sont reliées à un dispositif de commande (62) via un bus CAN (64).

6. Système pour carburant selon la revendication 5, **caractérisé en ce qu'**un dispositif de détection (48) est agencé de manière à pouvoir identifier la fonctionnalité de la pompe d'alimentation principale (26) en aval de la pompe d'alimentation principale (26), et de manière à être relié au dispositif de commande (62) via le bus CAN (64).

7. Système pour carburant selon la revendication 6, **caractérisé en ce que** le dispositif de détection (48) comprend un capteur de pression, qui est disposé en aval de la pompe d'alimentation principale et en amont du moteur à combustion interne (2).

8. Système pour carburant selon la revendication 5, **caractérisé en ce que** le dispositif de détection est agencé pour détecter le fonctionnement du premier moteur électrique (M1) actionnant la pompe d'alimentation principale (26), de préférence en détectant sa consommation d'énergie.

9. Système pour carburant selon l'une quelconque des revendications 6 à 8, **caractérisé en ce que**, lors d'une interruption opérationnelle identifiée de la pompe d'alimentation principale (26), l'écoulement de carburant est amené à s'écouler à travers le deuxième circuit d'écoulement (200).

10. Système pour carburant selon l'une quelconque des revendications précédentes, **caractérisé en ce qu'**un dispositif de détection (46), qui identifie la fonctionnalité de la pompe de transfert (28), est agencé dans le premier réservoir de carburant (20) et est relié au dispositif de commande (62) via le bus CAN (64).

11. Système pour carburant selon la revendication 10, **caractérisé en ce que** le dispositif de détection (46) comprend un capteur de niveau, qui détecte le niveau de carburant dans le premier réservoir de carburant (20).

12. Système pour carburant selon la revendication 10, **caractérisé en ce que** le dispositif de détection est agencé pour détecter le fonctionnement du moteur électrique (M2) actionnant la pompe de transfert (26), de préférence en détectant sa consommation d'énergie.

13. Système pour carburant selon l'une quelconque des revendications 10 à 12, **caractérisé en ce que** lors d'une interruption opérationnelle identifiée de la pompe de transfert (28), l'écoulement de carburant est amené à s'écouler à travers le troisième circuit d'écoulement (300).

14. Moteur à combustion interne (2), **caractérisé en ce qu'**il comprend un système pour carburant (4) selon l'une quelconque des revendications 1 à 13.

15. Véhicule (1), **caractérisé en ce qu'**il comprend un système pour carburant (4) selon l'une quelconque des revendications 1 à 13.

16. Procédé de commande d'un système pour carburant (4) pour un moteur à combustion interne (2) selon l'une quelconque des revendications 1 à 13, **caractérisé par** les étapes suivantes consistant à :
a) identifier la fonctionnalité de la pompe d'alimentation principale (26) et de la pompe de transfert (28),
- en cas d'une bonne fonctionnalité de la pompe d'alimentation principale (26) et de la pompe de transfert (28) ;
b) alimenter en carburant un premier conduit de carburant (36) relié à la pompe de transfert (28), à partir du second réservoir de carburant (22), via un premier canal d'entrée (30),
c) alimenter en carburant le premier réservoir de carburant (20), en actionnant la pompe de transfert (28) à l'aide d'un second moteur électrique (M2) dans une première direction, le carburant étant acheminé depuis le second réservoir de carburant (22), via le premier conduit de carburant (36), dans le premier réservoir de carburant (20),
d) acheminer le carburant depuis le premier réservoir de carburant (20) à travers le deuxième conduit de carburant (40), en actionnant la pompe d'alimentation principale (26) à l'aide d'un premier moteur électrique (M1) dans une première direction,
- en cas d'une interruption opérationnelle identifiée de la pompe d'alimentation principale (26) ;
e) indiquer de manière optionnelle au conducteur qu'une interruption opérationnelle a été identifiée,
f) alimenter en carburant la pompe de transfert (28), via un deuxième canal d'entrée (31), à partir du second réservoir de carburant (22), en actionnant la pompe de transfert (28) à l'aide du second moteur électrique (M2) et,
g) rediriger la pompe de transfert (28) dans une seconde direction, alimenter en carburant un troisième conduit de carburant (42) relié à la pompe de transfert (28), et alimenter en conséquence le moteur à combustion interne (2) en carburant à partir du second réservoir de carburant (22), ou
- en cas d'une interruption opérationnelle identifiée de la pompe de transfert (28) ;
h) indiquer de manière optionnelle au conducteur qu'une interruption opérationnelle a été identifiée,
i) alimenter en carburant la pompe d'alimentation principale (26), via un troisième canal d'entrée (32), à partir du second réservoir de carburant (22), en actionnant la pompe d'alimentation principale (26) à l'aide du premier moteur électrique (M1),
j) rediriger la pompe d'alimentation principale (26) dans une seconde direction, alimenter en carburant un quatrième conduit de carburant (42) relié à la pompe d'alimentation principale (26), et alimenter en conséquence le moteur à combustion interne (2) en carburant à partir du second réservoir de carburant (22).
